# EUROPÄISCHE PATENTSCHRIFT

(11) **EP 0 924 885 B1**
(45) Veröffentlichungstag und Bekanntmachung des Hinweises auf die Patenterteilung: **07.03.2007**
(21) Anmeldenummer: 98440274.3
(22) Anmeldetag: 27.11.1998
(51) Int. Cl.: H04B 10/213, H04N 7/173, H04J 3/16, H04J 4/00, H04J 1/12

(54) **Verfahren zum Bereitstellen von Zeitfenstern**
Method for providing time windows
Procédé de mise à disposition de fenêtres temporelles

(30) Priorität: 16.12.1997 DE 19755908
(43) Veröffentlichungstag der Anmeldung: 23.06.1999
(73) Patentinhaber: ALCATEL, 75008 Paris (FR)
(72) Erfinder: Körper, Renate, 74385 Pleidelsheim (DE); Beller, Dieter, 70825 Korntal (DE); Meyer, Heiko, 70825 Korntal (DE)
(74) Vertreter: Menzietti, Domenico

(56) Entgegenhaltungen:
- "DAVIC 1.0 Specification Part 08 lower layer protocols and physical interfaces" DAVIC SPECIFICATION. LOWER LAYER PROTOCOLS AND PHYSICAL INTERFACES, XX, XX, 26. Oktober 1996 (1996-10-26), Seiten 1-149, XP002139483

## Beschreibung

Die Erfindung bezieht sich auf ein Verfahren zum Bereitstellen von Zeitfenstern nach dem Oberbegriff des Patentanspruchs 1.

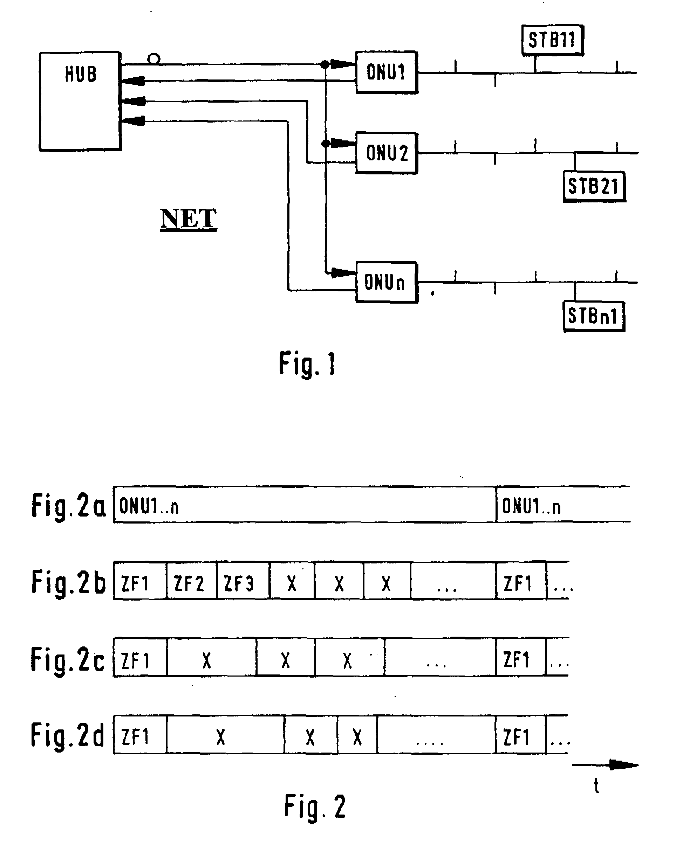

In Fig. 1 ist ein hybrides Glasfaser/Koaxialkabelnetz dargestellt. Das hybride Glasfaser/Koaxialkabelnetz NET beinhaltet eine Zentrale HUB, die über eine Punkt-zu-Mehrpunkt Verbindung aus optischen Übertragungsleitungen mit mehreren optischen Netzabschlußeinheiten ONU1, ONU2, ONUn verbunden ist; n ist eine natürliche Zahl, beispielsweise 16. Über die Punkt-zu-Mehrpunkt Verbindung werden Informationen von der Zentrale HUB zu den optischen Netzabschlußeinheiten ONU1, ONU2, ONUn übertragen. Diese Informationen beinhalten beispielsweise Kabelfernsehsignale und/oder Service-on-demand Signale. Jede optische Netzabschlußeinheit ONU1, ONU2, ONUn ist zusätzlich über eine Punkt-zu-Punkt Verbindung aus einer optischen Übertragungsleitung mit der Zentrale HUB verbunden. Die Punkt-zu-Punkt Verbindungen dienen zur Übertragung von Informationen von den optischen Netzabschlußeinheiten ONU1, ONU2, ONUn zur Zentrale HUB. Diese Informationen beinhalten beispielsweise Abrufsignale, zum Abruf von Diensten, z.B. von Videofilmen.

Jede optische Netzabschlußeinheit ONU1, ONU2, ONUn ist zusätzlich über Koaxialkabel mit mehreren Teilnehmerendeinrichtungen STB 11, STB21, STBn1 verbunden. Für jede Netzabschlußeinheit ONU1, ONU2, ONUn ist beispielhaft eine Teilnehmerendeinrichtung STB11, STB21, STBn1 dargestellt.

Eine Teilnehmerendeinrichtung STB11, STB21, STBn1 ist beispielsweise eine sogenannte Set-Top Box, mittels derer Abrufsignale zur Zentrale HUB übertragen und von der Zentrale HUB ausgesendete Signale empfangen, dekodiert und weiterverarbeitet werden.

Die Punkt-zu-Punkt Verbindungen zwischen optischen Netzabschlußeinheiten ONU1, ONU2, ONUn und Zentrale HUB sind anstelle einer Mehrpunkt-zu-Punkt Verbindung vorgesehen, um zu verhindern, daß sich Signale mehrerer optischer Netzabschlußeinheiten ONU1, ONU2, ONUn durch Überlagerungen gegenseitig negativ beeinflussen.

Es soll nun auf die Anmeldung einer Teilnehmerendeinrichtung STB11, STB21, STBn1 bei der Zentrale HUB eingegangen werden. Eine Teilnehmerendeinrichtung STB11, STB21, STBn1, die zum ersten Mal an das hybride Glasfaser/Koaxialkabelnetz NET angeschlossen wird, weiß zunächst nicht, mit welcher optischen Netzabschlußeinheit ONU1, ONU2, ONUn sie verbunden ist. Die Teilnehmerendeinrichtung STB11, STB21, STBn1 empfängt aufgrund der Punkt-zu-Mehrpunkt Verbindung von der Zentrale HUB alle Informationen, die alle optische Netzabschlußeinheiten ONU1, ONU2, ONUn betreffen. In den Informationen sind Angaben über Zeitpunkte enthalten, zu denen eine Anmeldung möglich ist. Bei der Anmeldung der Teilnehmerendeinrichtung STB11, STB21, STBn1 kann es zu Kollisionen kommen, da die Teilnehmerendeinrichtung STB21 beispielsweise aus den für die optische Netzabschlußeinheit ONU1 bestimmten Informationen, einen Zeitpunkt zum Aussenden der Anmeldung ableitet, die Teilnehmerendeinrichtung STB21 aber in Wirklichkeit mit der optischen Netzabschlußeinheit ONU2 verbunden ist, so daß die Aussendung der Anmeldung zu einem Zeitpunkt erfolgen kann, zu dem bereits eine andere Teilnehmerendeinrichtung, die mit der optischen Netzabschlußeinheit ONU2 verbunden ist, berechtigterweise Daten aussendet.

Aufgabe der Erfindung ist es, ein Verfahren und Protokolle anzugeben, mittels derer eine gesichertere Anmeldung einer Teilnehmerendeinrichtung eines hybriden Glasfaser/Koaxialkabelnetzes bei einer Zentrale des hybriden Glasfaser/Koaxialkabelnetzes erfolgen kann.

Gelöst wird diese Aufgabe das Verfahren gemäß Patentanspruch 1.

Im folgenden wird die Erfindung anhand eines Ausführungsbeispiels unter Zuhilfenahme der Figuren 1 bis 3 erläutert Es zeigen :
- Fig. 1: eine schematische Darstellung eines hybriden Glasfaser/Koaxialkabelnetzes,
- Fig. 2: vier erfindungsgemäße Protokolle und
- Fig. 3: einen erfindungsgemößen Frequenzplan.

Das Ausführungsbeispiel ist insbesondere auf ein hybrides Glasfaser/Koaxialkabelnetz, wie in Fig. 1 dargestellt und weiter oben beschrieben, anwendbar. Fig. 2 zeigt vier erfindungsgemäße Protokolle. In Fig. 2 a) ist ein Protokoll dargestellt, das für die Übertragung von Informationen von der Zentrale HUB des hybriden Glasfaser/Koaxialkabelnetzes aus Fig. 1 zu den optischen Netzabschlußeinheiten ONU1, ONU2, ONUn geeignet ist. Informationen zu einzelnen optischen Netzabschlußeinheiten ONU1, ONU2, ONUn werden beipielsweise im Frequenzmultiplex übertragen, z.B. ist die Frequenz F1 für Informationen für die optische Netzabschlußeinheit ONU1 reserviert und Frequenz F2>F1 für Informationen für die optische Netzabschlußeinheit ONU2, usw. Die Frequenz F0<F1 ist beipielsweise vogesehen, um den optischen Netzabschlußeinheiten ONU1, ONU2, ONUn Vorschriften zur Reservierung von Zeitfenstern ZF1 für die Übertragung von Anmeldungen von Teilnehmerendeinrichtungen STB11, STB21, STBn1 zu übermitteln. Die optischen Netzabschlußeinheiten ONU1, ONU2, ONUn können aus den empfangenen Vorschriften ableiten, an welcher Stelle im Protokoll, das für die Übertragung von Informationen von den optischen Netzabschlußeinheiten ONU1, ONU2, ONUn zur Zentrale HUB vorgesehen ist, ein Zeitfenster ZF1 für Anmeldungen von Teilnehmerendeinrichtungen STB11, STB21, STBn1 einzurichten ist.

In Fig. 2b) ist ein solches Protokoll dargestellt. Das Protokoll beinhaltet mehrere Zeitfenster ZF1, ZF2, ZF3, X, die für die Übertragung von Informationen von der optischen Netzabschlußeinheit ONU 1 zur Zentrale HUB vorgesehen sind. Das Zeitfenster ZF1 ist für die Übertragung von Anmeldungen von Teilnehmerendeinrichtungen STB11 reserviert. Das Zeitfenster ZF2 ist beispielweise für die Übertragung von Steuerinformationen reserviert. Das Zeitfenster ZF3 ist beispielsweise für die Übertragung von Daten reserviert. Die Zeitfenster X sind beispielsweise für die Übertragung von Abrufsignalen reserviert.

In Fig. 2c) ist ein zweites Protokoll dargestellt, das ebenfalls mehrere Zeitfenster ZF1, X beinhaltet und für die Übertragung von Informationen von der optischen Netzabschlußeinheit ONU2 zur Zentrale HUB vorgesehen ist. Das Zeitfenster ZF1 ist für die Übertragung von Anmeldungen von Teilnehmerendeinrichtungen STB21 reserviert. Die Zeitfenster X sind beispielsweise für die Übertragung von Abrufsignalen reserviert.

In Fig. 2d) ist ein drittes Protokoll dargestellt, das ebenfalls mehrere Zeitfenster ZF1, X beinhaltet und für die Übertragung von Informationen von der optischen Netzabschlußeinheit ONUn zur Zentrale HUB vorgesehen ist. Das Zeitfenster ZF 1 ist für die Übertragung von Anmeldungen von Teilnehmerendeinrichtungen STBn1 reserviert. Die Zeitfenster X sind beispielsweise für die Übertragung von Abrufsignalen reserviert.

Die Zeitfenster ZF1 der Protokolle aus Fig. 2b), 2c), 2d) überlappen. Im Idealfall, d.h. ohne die Einbeziehung von Laufzeitverzögerungen auf den Übertragungsleitungen überlappen die Zeitfenster ZF1 vollständig. Mit Einbeziehung von Laufzeitverzögerungen können die Zeitfenster ZF1 zeitlich geringfügig gegeneinander versetzt angeordnet sein, damit bei der Übertragung der Protokolle die Protokolle gleichzeitig bei der Zentrale HUB eintreffen. Eine Teilnehmerendeinrichtung STB 11, STB21, STBn1, die aus den von der Zentrale HUB übertragenen Informationen ein Zeitfenster ZF 1 zum Übertragen von Anmeldungen ableitet, kann somit eine Anmeldung zur Zentrale HUB übertragen, ohne befürchten zu müssen, daß die Anmeldung mit z.B. Abrufsignalen kollidiert, da sich die Zeitfenster ZF1 für alle optischen Netzabschlußeinheiten ONU1, ONU2, ONUn überlappen und es somit unerheblich ist, mit welcher optischen Netzabschlußeinheit ONU1, ONU2, ONUn die Teilnehmerendeinrichtung STB11, STB21, STBn1 verbunden ist.

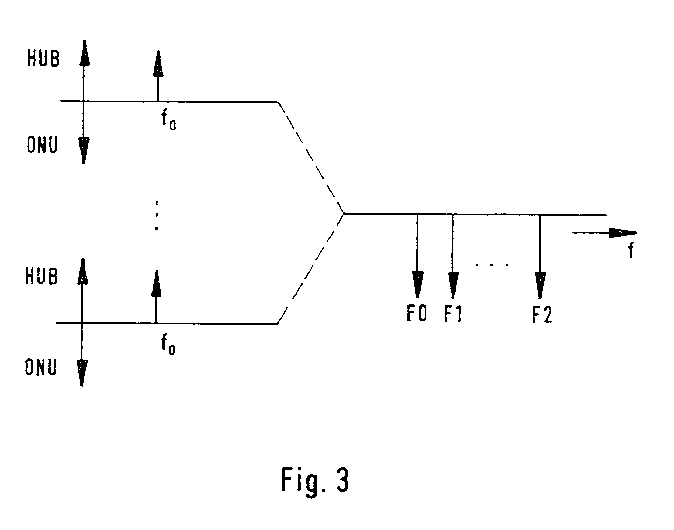

In Fig. 3 ist ein Frequenzplan dargestellt. Auf der horizontalen Achse ist die Frequenz aufgetragen. Auf der vertikalen Achse sind nach oben die zur Zentrale HUB übertragenen Signale, die sogenannten Upstream-Signale und nach unten die zu den optischen Netzabschlußeinheiten ONU1, ONU2, ONUn, die sogenannten Downstream-Signale aufgetragen. Für die Übertragung zu den optischen Netzabschlußeinheiten ONU1, ONU2, ONUn werden die Frequenzen F0, F1, ..., Fn verwendet. Die Frequenz F0 dient beispielsweise dazu, Informationen und/oder Vorschriften über den Aufbau der von den optischen Netzabschlußeinheiten ONU1, ONU2, ONUn zur Zentrale HUB auszusendenden Protokollen zu übertragen. Die Frequenz F1 dient beispielsweise zur Übertragung von für die optische Netzabschlußeinheit ONU1 spezifische Informationen. Die Frequenz Fn dient beispielsweise zur Übertragung von für die optische Netzabschlußeinheit ONUn spezifische Informationen.

In jedem Protokoll, das zur Übertragung von Informationen von einer optischen Netzabschlußeinheit ONU1, ONU2, ONUn zur Zentrale HUB dient, ist zusätzlich zum Zeitfenster ZF1 eine Frequenz f₀ für die Übertragung von Anmeldungen von Teilnehmerendeinrichtungen STB1, STB2, STBn reserviert. Durch die Festlegung einer bestimmten Frequenz f₀ ist ein weiterer Freiheitsgrad bei der Aussendung von Anmeldungen von Teilnehmerendeinrichtungen STB1, STB2, STBn verloren gegangen. Dadurch wird aber das mögliche Auftreten von Kollisionen weiter minimiert.

Anstelle einer Frequenz f₀ kann auch ein Frequenzband beinhaltend mehrere Frequenzen festgelegt werden. Dies erhöht die Anzahl der sich gleichzeitg anmeldbaren Teilnehmerendeinrichtungen STB1, STB2, STBn.

Im folgenden wird ein Verfahren zum Bereitstellen von Zeitfenstern ZF1 in Protokollen für die Übertragung von Informationen von optischen Netzabschlußeinheiten ONU1, ONU2, ONUn eines hybriden Glasfaser/Koaxialkabelnetzes NET zu einer Zentrale HUB des hybriden Glasfaser/Koaxialkabelnetzes NET beschrieben. Die Zentrale HUB überträgt den optischen Netzabschlußeinheiten ONU1, ONU2, ONUn Informationen. Diese Informationen beinhalten Vorschriften zur Reservierung von Zeitfenstern ZF1 für die Übertragung von Anmeldungen von Teilnehmerendeinrichtungen STB1, STB2, STBn, wobei die Vorschriften angeben, daß sich die zu reservierenden Zeitfenster ZF1 für alle optischen Netzabschlußeinheiten ONU1, ONU2, ONUn überlappen sollen. Die optischen Netzabschlußeinheiten ONU1, ONU2, ONUn empfangen die Informationen der Zentrale HUB und führen die Reservierungen in ihren Protokollen durch. Alternativ erfolgen die Reservierungen der Protokolle, d.h. die Protokollfestlegung bereits in der Zentrale HUB. Sie werden dann von der Zentrale HUB zu den optischen Netzabschlußeinheiten ONU1, ONU2, ONUn übertragen.

Die Vorschriften können zusätzlich angeben, daß in jedem Zeitfenster ZF1 dieselbe Frequenz f₀ für die Übertragung von Anmeldungen von Teilnehmerendeinrichtungen STB1, STB2, STBn festzulegen ist. Die optischen Netzabschlußeinheiten ONU1, ONU2, ONUn führen dann die Festlegungen durch.

Im folgenden wird ein Verfahren zum Anmelden einer Teilnehmerendeinrichtung STB1, STB2, STBn bei einer Zentrale HUB eines hybriden Glasfaser/Koaxialkabelnetzes NET beschrieben. Die Teilnehmerendeinrichtung STB1, STB2, STBn detektiert die Information über ein bereitgestelltes Zeitfenster ZF1 aus den von der Zentrale HUB übertragenen Informationen. Die Teilnehmerendeinrichtung STB1, STB2, STBn überträgt daraufhin die Anmeldung in dem detektierten Zeitfenster ZF1 zur Zentrale HUB.

Die Teilnehmerendeinrichtung STB1, STB2, STBn kann die Anmeldung zusätzlich auf der festgelegten Frequenz f₀ übertragen.

Die von der Teilnehmerendeinrichtung STB1, STB2, STBn übertragene Anmeldung beinhaltet die Adresse der Teilnehmerendeinrichtung STB1, STB2, STBn. Die Zentrale HUB detektiert die übertragene Adresse sowie die optische Netzabschlußeinheit ONU1, ONU2, ONUn, mit der die Teilnehmerendeinrichtung STB1, STB2, STBn verbunden ist. Die Zentrale HUB überträgt der Teilnehmerendeinrichtung STB1, STB2, STBn anschließend die Information über die detektierte optische Netzabschlußeinrichtung ONU1, ONU2, ONUn zusammen mit der Adresse der Teilnehmerendeinrichtung STB1, STB2, STBn. Die Teilnehmerendeinrichtung STB1, STB2, STBn weiß dann mit welcher optischen Netzabschlußeinrichtung ONU1, ONU2, ONUn sie verbunden ist und braucht im folgenden nur Signale überwachen, die für diese optische Netzabschlußeinrichtung ONU1, ONU2, ONUn bestimmt sind, z.B. Signale der Frequenz F1 für die optische Netzabschlußeinrichtung ONU1.

## Patentansprüche

1. Verfahren zum Bereitstellen von Zeitfenstern (ZF1) für die Übertragung von Informationen von optischen Netzabschlußeinheiten (ONU1, ONU2, ONUn) eines hybriden Glasfaser/Koaxialkabelnetzes (NET) zu einer Zentrale (HUB) des hybriden Glasfaser/Koaxialkabelnetzes (NET), wobei die Zentrale (HUB) den optischen Netzabschlußeinheiten (ONU1, ONU2, ONUn) Informationen überträgt, **dadurch gekennzeichnet, daß** die Informationen Vorschriften zur Reservierung von Zeitfenstern (ZF1) für die Übertragung von Anmeldungen von Teilnehmerendeinrichtungen (STB1, STB2, STBn) beinhalten, wobei die Vorschriften angeben, daß sich die zu reservierenden Zeitfenster (ZF1) für alle optischen Neizabschlußeinheiten (ONU1, ONU2, ONUn) überlappen sollen, und daß die optischen Netzabschlußeinheiten (ONU1, ONU2, ONUn) die Informationen der Zentrale (HUB) empfangen und die Reservierungen durchführen.

2. Verfahren nach Anspruch 1, **dadurch gekennzeichnet, daß** die Vorschriften angeben, daß in jedem Zeitfenster (ZF1) dieselbe Frequenz (f₀) für die Übertragung von Anmeldungen von Teilnehmerendeinrichtungen (STB1, STB2, STBn) festzulegen ist, und die optischen Netzabschlußeinheiten (ONU1, ONU2, ONUn) die Festlegungen durchführen.

3. Verfahren zum Anmelden einer Teilnehmerendeinrichtung (STB1, STB2, STBn) bei einer Zentrale (HUB) eines hybriden Glasfaser/Koaxialkabelnetzes (NET), wobei Zeitfenster (ZF1) nach dem Verfahren nach Anspruch 1 bereitgestellt werden die Teilnehmerendeinrichtung (STB1, STB2, STBn) die Information über ein bereitgestelltes Zeitfenster (ZF1) aus den von der Zentrale (HUB) übertragenen Informationen detektiert, und die Teilnehmerendeinrichtung (STB1, STB2, STBn) die Anmeldung in dem detektierten Zeitfenster (ZF1) zur Zentrale (HUB) überträgt.

4. Verfahren nach Anspruch 3, wobei bei Zeitfenster (ZF1) nach dem Verfahren nach Anspruch 2 bereitgestellt werden, und die Teilnehmerendeinrichtung (STB1, STB2, STBn) die Anmeldung auf der festgelegten Frequenz (f₀) überträgt.

5. Verfahren nach Anspruch 3, **dadurch gekennzeichnet, daß** die von der Teilnehmerendeinrichtung (STB1, STB2, STBn) übertragene Anmeldung die Adresse der Teilnehmerendeinrichtung (STB1, STB2, STBn) beinhaltet, daß die Zentrale (HUB) die übertragene Adresse sowie die optische Netzabschlußeinheit (ONU1, ONU2, ONUn) detektiert, mit der die Teilnehmerendeinrichtung (STB1, STB2, STBn) verbunden ist, und daß die Zentrale (HUB) der Teilnehmerendeinrichtung (STB1, STB2, STBn) die Information über die detektierte optische Netzabschlußeinrichtung (ONU1, ONU2, ONUn) zusammen mit der Adresse der Teilnehmerendeinrichtung (STB1, STB2, STBn) überträgt.

## Claims

1. Method for providing time windows (ZF1) for transmitting information from optical network termination units (ONU1, ONU2, ONUn) of a hybrid glass fibre/coaxial cable network (NET) to a central unit (HUB) of the hybrid glass fibre/coaxial cable network (NET), wherein the central unit (HUB) transmits information to the optical network termination units (ONU1, ONU2, ONUn), **characterised in that** the information contains instructions for reserving time windows (ZF1) for transmitting logons from subscriber terminals (STB1, STB2, STBn), wherein the instructions indicate that the time windows (ZF1) to be reserved should overlap for all the optical network termination units (ONU1, ONU2, ONUn), and **in that** the optical network termination units (ONU1, ONU2, ONUn) receive the information from the central unit (HUB) and perform the reservations.

2. Method according to claim 1, **characterised in that** the instructions indicate that in each time window (ZF1) the same frequency (f₀) is to be set for transmitting logons from subscriber terminals (STB1, STB2, STBn) and the optical network termination units (ONU1, ONU2, ONUn) perform the settings.

3. Method for logging on a subscriber terminal (STB1, STB2, STBn) at a central unit (HUB) of a hybrid glass fibre/coaxial cable network (NET), wherein time windows (ZF1) are provided according to the method according to claim 1, the subscriber terminal (STB1, STB2, STBn) detects the information from the information transmitted from the central unit (HUB) via a time window (ZF1) provided and the subscriber terminal (STB1, STB2, STBn) transmits the logon to the central unit (HUB) in the detected time window (ZF1).

4. Method according to claim 3, wherein the time windows (ZF1) are provided according to the method according to claim 2 and the subscriber terminal (STB1, STB2, STBn) transmits the logon on the set frequency (f₀).

5. Method according to claim 3, **characterised in that** the logon transmitted from the subscriber terminal (STB1, STB2, STBn) contains the address of the subscriber terminal (STB1, STB2, STBn), **in that** the central unit (HUB) detects the transmitted address and the optical network termination unit (ONU1, ONU2, ONUn) to which the subscriber terminal (STB1, STB2, STBn) is connected and **in that** the central unit (HUB) of the subscriber terminal (STB1, STB2, STBn) transmits the information about the detected optical network termination unit (ONU1, ONU2, ONUn) together with the address of the subscriber terminal (STB1, STB2, STBn).

## Revendications

1. Procédé de mise à disposition de fenêtres temporelles (ZF1) pour la transmission d'informations depuis des unités de terminaison de réseau optiques (ONU1, ONU2, ONUn) d'un réseau hybride en fibres de verre /câble coaxial (NET) vers un central (HUB) du réseau hybride en fibres de verre / câble coaxial (NET), le central (HUB) transmettant des informations aux unités de terminaison de réseau optiques (ONU1, ONU2, ONUn), **caractérisé en ce que** les informations contiennent des instructions pour la réservation de fenêtres temporelles (ZF1) pour la transmission d'inscriptions de terminaux d'abonné (STB11, STB21, STB1n), les instructions indiquant que les fenêtres temporelles (ZF1) à réserver pour toutes les unités de terminaison de réseau optiques (ONU1, ONU2, ONUn) doivent se chevaucher et que les unités de terminaison de réseau optiques (ONU1, ONU2, ONUn) reçoivent les informations du central (HUB) et effectuent les réservations.

2. Procédé selon la revendication 1, **caractérisé en ce que** les instructions indiquent qu'il faut déterminer dans chaque fenêtre temporelle (ZF1) la même fréquence (f0) pour la transmission des inscriptions des terminaux d'abonné (STB11, STB21, STB1n) et les unités de terminaison de réseau optiques (ONU1, ONU2, ONUn) effectuent les déterminations.

3. Procédé pour l'inscription d'un terminal d'abonné (STB11, STB21, STB1n) auprès du central (HUB) d'un réseau hybride en fibres de verre / câble coaxial (NET), des fenêtres temporelles (ZF1) étant mises à disposition selon le procédé de la revendication 1, le terminal d'abonné (STB11, STB21, STB1n) détectant les informations sur une fenêtre temporelle (ZF1) mise à disposition à partir des informations transmises par le central (HUB) et le terminal d'abonné (STB11, STB21, STB1n) transmettant l'inscription vers le central (HUB) dans la fenêtre temporelle (ZF1) détectée.

4. Procédé selon la revendication 3, des fenêtres temporelles (ZF1) étant mises à disposition selon le procédé de la revendication 2 et le terminal d'abonné (STB11, STB21, STB1n) transmettant l'inscription sur la fréquence (f0) déterminée.

5. Procédé selon la revendication 3, **caractérisé en ce que** l'inscription transmise par le terminal d'abonné (STB11, STB21, STB1n) contient l'adresse du terminal d'abonné (STB11, STB21, STB1n), que le central (HUB) détecte l'adresse transmise ainsi que l'unité de terminaison de réseau optique (ONU1, ONU2, ONUn) avec laquelle le terminal d'abonné (STB11, STB21, STB1n) est relié et que le central (HUB) transmet au terminal d'abonné (STB11, STB21, STB1n) l'information sur l'unité de terminaison de réseau optique (ONU1, ONU2, ONUn) détectée conjointement avec l'adresse du terminal d'abonné (STB11, STB21, STB1n).
